# EUROPEAN PATENT SPECIFICATION

(11) **EP 0 641 849 B1**
(45) Date of publication and mention of the grant of the patent: **06.10.1999**
(21) Application number: 94306436.0
(22) Date of filing: 01.09.1994
(51) Int. Cl.: C09K 5/00, C10M 111/04

(54) **Heat transfer fluid containing organosiloxane compositions**
Wärmeträgerflüssigkeit die Organosiloxan-Zusammensetzung enthält
Fluide de transfert de chaleur contenant des compositions d'organosiloxane

(30) Priority: 07.09.1993 US 116600
(43) Date of publication of application: 08.03.1995
(73) Proprietor: DOW CORNING CORPORATION, Midland, Michigan 48686-0994 (US)
(72) Inventor: Asch, Robin Sue, Beaverton, Michigan (US); Hilty, Terrence Keith, Midland, Michigan (US); Durfee, Loren Dean, Midland, Michigan (US); McIntyre, Gary Allen, Bloomfield Hills, Michigan (US); Swihart, Terence John, Essexville, Michigan (US)
(74) Representative: Spott, Gottfried, Dr.

(56) References cited:
- EP-A- 0 283 622
- CA-A- 1 100 931
- GB-A- 835 832
- US-A- 4 193 885

## Description

The present invention relates to a heat transfer fluid (refrigerating machine oil) composition comprising alkylmethylsiloxane fluids or mixtures of alkylmethylsiloxane fluids. The invention further relates to the use of alkylmethylsiloxane fluids in devices utilized for cooling.

The properties desirable in low-temperature heat transfer fluids are stability to refrigerants, excellent lubricating properties (i.e. anti-seizure and antiwear), high heat capacity (i.e. specific heat) properties and an ability to act as a coolant by exhibiting a low viscosity at low temperatures. It is further desired that these low-temperature fluids be capable of demonstrating a high flashpoint while retaining a low viscosity at low temperatures for ease of handling. A heat transfer fluid having a high flashpoint while maintaining a low viscosity at lower temperatures is even more crucial due to impending legislation in many countries requiring hazardous labelling on materials with closed-cup flashpoints of less than 140°F (60°C).

Heat transfer fluids are described in the art. For example, halocarbons and halogenated hydrocarbons; aqueous solutions of alcohols such as-methanol, ethylene glycol and propylene glycol; and aqueous solutions of salts such as calcium chloride or soda have been used as low-viscosity heat transfer fluids at low temperatures, depending on the temperature range. The disadvantages of these fluids are also well known. Lower alcohols require elaborate safety precautions because of their toxicity and low flashpoints. Aqueous salt solutions are highly corrosive and have a high viscosity at low temperatures. Halocarbon and halogenated hydrocarbon compounds are believed to be partly responsible for the photochemical degradation of the ozone layer and in some instances are also toxic. Thus, mixtures of these materials with silicone oils suffer from the same disadvantages.

The use of silicone oils in devices is not new. For example, JP-A 63/289098 discloses a lubricating oil which is compatible with Freon^{(R)} that contains 2 weight percent or more of modified silicone oil with a kinematic viscosity at 40°C. of 10 to 50,000 mm²/s (centistokes). The silicone oil is prepared by substituting part or all of the methyl groups of a polydimethylsiloxane with groups selected from at least two classes of (A) alkyl containing 2-40 carbon atoms, (B) aryl and (C) groups of the formula -R¹, -R²OH, -R²OR³ or -R²C(O)-O-R³, where R¹ is alkylaryl or aralkyl, R² is selected from alkylene, arylene, alkylarylene or aralkylene and R³ is selected from hydrogen, alkyl, alkenyl, aryl, alkylaryl or aralkyl.

Alkylmethylsiloxanes have been investigated for applications in hydraulic, lubricating and brake fluids. U.S. Patent No. 2,398,187 details the use of linear dialkyl siloxane polymer and copolymer fluids for such activites on the basis of their slight change in viscosity with temperature, low pour point and high flash point. U.S. Patent No. 4,443,351 teaches that linear polydimethylsiloxanes (PDMS) or copolymers of PDMS with alkylmethyl siloxanes can be blended with a chlorendate diester, a lubricant additive and a block copolymer of polydimethylsiloxane-polybutadiene. U.S. Patent No. 3,671,433 reveals the enhancement of alkylmethyl polysiloxane fluid lubricity with addition of small amounts of dodecenyl succinic acid.

Cyclic alkylmethylsiloxanes have also been dislcosed in U.S. Patent No. 4,719,024 wherein methylalkyl-cyclosiloxanes having a wide range of viscosity and thermal stability are used to form hydraulic fluids and lubricants.

Siloxanes have also been disclosed as lubricating oils for devices such as refrigerators in U.S. Patent No. 5,084,196. A lubricating oil composition for a Flon (fluorine-containing alkane) atmosphere is described therein which comprises 100 parts of a base oil having a kinematic viscosity at 40°C. of 5 to 500 mm²/s (cSt) and 0.001 to 0.1 parts by weight of a polysiloxane having an epoxy structure with a kinematic viscosity at 25°C. of 1000 mm²/s (cSt) or higher. The lubrication oil also has high temperature stability and antifoaming properties in the presence of various coolants and is utilized as a refrigerator oil. U.S. Patent No. 4,946,611 claims a refrigerator oil containing at least one linear or cyclic fluorinated siloxane compound. It further teaches that the refrigerator oil is effective as a lubricant for refrigerators, coolers and heat pumps which employ various Flon compounds as refrigerants. A siloxane based refrigeration oil is also disclosed in Canadian Patent Application No. 2,003,332. These refrigerating oils produce temperatures as low as -140°C. and are oils free from salts, alcohols, halogenated hydrocarbons and halohydrocarbons. They also have a low viscosity at low temperatures and consist essentially of mixtures of at least two members selected from hexamethyl disiloxane, octamethyl trisiloxane, linear decamethyl tetrasiloxane, octamethyl cyclotetrasiloxane and decamethyl cyclopentasiloxane.

However, none of the references cited teach a heat transfer fluid which demonstrates good heat transfer, a high flashpoint while retaining a low viscosity at low temperatures and which comprises one or more alkylmethylsiloxane fluids or a combination of alkylmethylsiloxane fluids with various trimethylsilyl end-blocked polydiorgano-siloxane based fluids as claimed herein.

The present invention provides compositions comprising various alkylmethylsiloxane compounds or mixtures of said compounds. It further relates to heat transfer fluids comprising one or more alkylmethylsiloxane fluids in combination with triorganosilyl endblocked polydiorgano-siloxane fluids. Finally, it introduces a method of using a heat transfer fluid comprising alkylmethylsiloxane fluids and mixtures thereof and also provides devices utilizing heat transfer fluids containing alkylmethylsiloxanes.

The present invention is a heat transfer fluid composition comprising an organosiloxane selected from
(a) R¹R₂SiO(RR¹SiO)ₓ(R₂SiO)_{y}SiR₃,
(b) R¹₂RSiO(RR¹SiO)ₓ(R₂SiO)_{y}SiR₃,
(c) R¹₃SiO(RR¹SiO)ₓ(R₂SiO)_{y}SiR₃,
(d) R₃SiO(RR¹SiO)ₓ(R₂SiO)_{y}SiR₃,
(e) R¹R₂SiO(RR¹SiO)ₓ(R₂SiO)_{y}SiR¹R₂,
(f) R¹₂RSiO(RR¹SiO)ₓ(R₂SiO)_{y}SiR¹₂R,
(g) R¹₃SiO(RR¹SiO)ₓ(R₂SiO)_{y}SiR¹₃ and (h) mixtures thereof, wherein each R is a radical independently selected from alkyl radicals having from 1 to 20 carbon atoms, haloalkyl radicals having from 1 to 20 carbon atoms, cycloalkyl radicals having from 4 to 20 carbon atoms and aryl radicals. R¹ has the formula CₙH₂ₙ₊₁ wherein n has a value of from 1 to 10, x has a value of from 0 to 100 and y has a value of from 0 to 100, with the proviso that there is present in the composition at least one R¹ group wherein n has a value of from 2 to 10.

For (a) through (h), each R is a radical independently selected from alkyl radicals having from 1 to 20 carbon atoms, haloalkyl radicals having from 1 to 20 carbon atoms, cycloalkyl radicals having from 4 to 20 carbon atoms and aryl radicals. Thus, R can be an alkyl radical such as methyl, ethyl, propyl, butyl, hexyl and octyl; cycloaliphatic radicals, such as cyclohexyl; aryl radicals, such as phenyl, tolyl and xylyl; aralkyl radicals, such as benzyl and phenylethyl or haloalkyl radicals wherein the alkyl group has at least one of its hydrogen atoms replaced with a halogen, such as fluorine, chlorine or bromine. Preferred haloalkyl radicals have the formula CₙF₂ₙ₊₁CH₂CH₂- wherein the subscript n has a value of from 1 to 10, such as CF₃CH₂CH₂-, C₄F₉CH₂CH₂- or 3,3,3-trifluoropropyl. The several R radicals can be identical or different, as desired. Preferred is where R is methyl.

For (a) through (h), R¹ has the formula CₙH₂ₙ₊₁ wherein n has a value of from 1 to 10. Thus, R¹ is an alkyl radical having 1 to 10 carbon atoms such as methyl, ethyl, propyl, butyl, hexyl, octyl, nonyl and decyl. It is preferred for purposes of this invention that n have a value from 2 to 6. In (a) through (h), x has a value of 0 to 100 and y has a value of from 0 to 100. It is preferred that x have a value of between 1 and 10.

Preferred groups for (a) through (h) include R¹MeSi(OSiMe₃)₂, R¹Me₂SiOSiMe₂R¹, R¹Me₂SiOSiMe₃ and Me₃SiO(Me₂SiO)ₓSiMe₃. Preferred as the heat transfer fluid compositions of this invention are pure compounds or mixtures of the above compounds represented by formulae (a) through (h). Possible mixtures of organosiloxanes for our heat transfer fluids are mixtures of PrMeSi(OSiMe₃)₂ and HexMeSi(OSiMe₃)₂, BuMeSi(OSiMe₃)₂ and PrMeSi(OSiMe₃)₂, (BuMe₂Si)₂O and Me₃SiO(Me₂SiO)ₓSiMe₃ and PrMeSi(OSiMe₃)₂ and Me₃SiO(Me₂SiO)ₓSiMe₃, wherein Me is methyl, Pr is propyl, Bu is butyl, Hex is hexyl and x has the value given above. The organosiloxanes of our invention may be mixed at any ratios and weight percents to produce the organosiloxane mixtures described. Thus, the compounds represented by (a) through (h) can be mixed at ratios of 1 weight percent to 99 weight percent and from 99 weight percent to 1 weight percent and the compounds may be the same or can be different compounds as desired. One skilled in the art can readily determine the preferred weight percents of the siloxanes to be mixed by routine experimentation. As shown in the examples and in Table I, the siloxanes may be used alone or mixed in such a way that the viscosity at -70°C (-94°F) is below 20 mPa·s [centipoise (cP)] and preferably lower; and the flashpoint is above 50°C. (122°F.), more preferably above 60°C. (140°F.).

Several of the compositions of the present invention contain preferred characteristics for a heat transfer fluid because they have a low viscosity at -70°C. and a flashpoint above 60°C. (140°F). These materials would not be classified as "hazardous" under current relevant legislation so that no elaborate safety precautions have to be taken. The compositions of this invention have displayed no crystallization at low temperatures, even at extended times. The glass transition temperatures of our compositions vary in the -120°C. to -140°C. range making these heat transfer fluid compositions very desirable. All the more so is true in devices which require fluids capable of operating at low temperatures or for industrial applications of deep cooling.

In our heat transfer fluids, the compounds represented by the formulae (a) through (h) are used in an effective amount. Due to the advantageous nature of these compounds, i.e. low viscosity at low temperatures and high flashpoint, the compounds may be used without any additives or diluents. In general, an effective amount may be any amount which will produce the desired fluid characteristics for a given system. Thus, as little as 1 weight percent or less of one or more of our compounds which contain an R¹ group, wherein n has a value of 2 or greater, may be used in combination with the other compounds of this invention in various ratios. They may also be combined with the optional diluents described below. As much as 100 weight percent of any of the compounds (a)-(h) of this invention, containing one or more R¹ groups wherein n has a value of 2, may also be used as our claimed heat transfer fluids. various diluents, inhibitors and other additives well known in the functional fluid or heat transfer art may be optionally added to the heat transfer fluids of this invention. Although the incorporation of such additives is often desirable, they are not necessary to accomplish the intended purposes of the present invention.

Our method employs a heat transfer fluid in a device utilized for cooling comprising an organosiloxane selected from
(a) R¹R₂SiO(RR¹SiO)ₓ(R₂SiO)_{y}SiR₃,
(b) R¹₂RSiO(RR¹SiO)ₓ(R₂SiO)_{y}SiR₃,
(c) R¹₃SiO(RR¹SiO)ₓ(R₂SiO)_{y}SiR₃,
(d) R₃SiO(RR¹SiO)ₓ(R₂SiO)_{y}SiR₃,
(e) R¹R₂SiO(RR¹SiO)ₓ(R₂SiO)_{y}SiR¹R₂,
(f) R¹₂RSiO(RR¹SiO)ₓ(R₂SiO)_{y}SiR¹₂R,
(g) R¹₃SiO(RR¹SiO)ₓ(R₂SiO)_{y}SiR¹₃ and (h) mixtures thereof, wherein each R is a radical independently selected from alkyl radicals having from 1 to 20 carbon atoms, haloalkyl radicals having from 1 to 20 carbon atoms, cycloalkyl radicals having from 4 to 20 carbon atoms and aryl radicals and R¹ has the formula CₙH₂ₙ₊₁ wherein n has a value of from 1 to 10, x has a value of from 0 to 100, y has a value of from 0 to 100, with the proviso that there is present in the fluid at least one R¹ group wherein n has a value of from 2 to 10. In this aspect of the invention, R, R¹, n, x and y are as delineated above for our compositions. In our method, 100% of any of the compounds represented by the formulae (a) through (h), containing 1 or more R¹ groups wherein n has a value of 2 or greater, may be used. Also, mixtures of the organosiloxane compounds (a) through (h) can be used for our heat transfer fluid compositions with the proviso that there is present in the mixture at least one R¹ group wherein n has a value of 2 or greater.

Thus, the alkylmethylsiloxane-based heat transfer fluids-of this invention can be used in any application requiring a low temperature exchange (transfer) fluid. Accordingly, our heat transfer fluid can be employed in devices such as cold stores, earth probes, chemical processing equipment, environmental test/control chambers, refrigeration units (as a secondary coolant), laboratory heating/cooling baths, deep freeze equipment, low temperature reactors, low temperature condensers and other heating/refrigerating systems. Brine systems, which have heretofore used as heat transfer fluids like water/glycol mixtures, methanol/acetone mixtures, hydrocarbon oils, Freon(R) in the liquid phase, methylene chloride, trichloroethylene and diethylbenzene, do not reach the low temperatures attained by the compositions of our invention.

Additonally, applications involving extreme temperature stressing may also be considered, including automotive coolants or transformer fluids in climates subject to wide variations in temperature. This is because our heat transfer fluids, comprised of organosiloxanes and their mixtures, have glass transition temperatures in the -120° to -140°C. range and their individual boiling points are 150°C. to 250°C. under normal conditions.

The compounds and mixtures in the examples were tested for boiling point by employing typical vapor pressure techniques. "Boiling Point" denotes the temperature of a liquid at which its vapor pressure is equal to or slightly greater than the atmospheric pressure of the environment. Determining the vapor pressure of compounds is well known to those skilled in the art and needs no extensive delineation herein.

Temperature-viscosity profiles of the compounds and mixtures in our examples were obtained using a piston-type temperature/viscometer sensor which was adapted for benchtop collection of low temperature viscosity data. The compound 3-hexylheptamethyltrisiloxane was chosen as a standard fluid because of its relatively steep temperature/viscosity profile and was calibrated according to ASTM D445. The resulting profile was then used to calibrate the piston-type viscometer sensor.

Our compounds and mixtures were also tested in the examples for flashpoint. "Flash point" denotes the temperature at which a liquid or volatile solid gives off vapor sufficient to form an ignitable mixture with the air near the surface of the liquid or within the test vessel. The testing was accomplished in the following manner: the material to be tested is placed in a Pensky-Martens Closed Cup Apparatus. Periodically during a controlled temperature rise, a flame is placed into the confined air space over the sample. The temperature at which the material will flash, but does not continue to burn, is then recorded. This procedure is based on ASTM D93, ASTM E134 and ASTM IP34. The results are reported in degrees Fahrenheit (°F).

The compounds and mixtures in the examples were also evaluated for low temperature crystallization and glass transition temperatures. The compounds were tested via differential thermal analysis (DTA) in which the sample and reference materials were placed close together in an environment which is either heated or cooled through the temperature range of interest. As the environmental temperature is changed, the temperatures of sample and reference also change. A plot of delta-T (sample-reference) versus reference temperature is produced. When physical or chemical changes occur in the sample, the DTA curve indicates a series of peaks in an upward (exothermic) or downward (endothermic) direction on the delta-T or heat-flow axis. The data is reported in the form of an annotated thermogram with features identified by the analyst. Factors, such as heating rate, furnace atmosphere or instrument, affect the positions of curve peaks and perhaps the number of peaks. The method utilized to obtain the glass transition and crystallization data is similar to ASTM E1356.

Table I shows physical properties of the compositions of the present invention. The siloxanes of Table I are organosiloxanes or mixtures of organosiloxanes and show a low viscosity at low temperatures and a high flashpoint.

### Example I

A variety of polydimethylsiloxanes and alkylmethylsiloxanes were tested for Boiling Point (°C.), Flashpoint (°C.) and Viscosity (mPa·s) [also in centipoise (cP)] at 25°C., 0°C., -30°C., -50°C. and -70°C. The results of this data are reported in Table I. The fluids denoted in Table I are as follows: Fluid A is a compound having the formula Me₃SiOMe₂SiOSiMe₃. Fluid B is a compound having the average formula Me₃SiO(Me₂SiO)₁₋₇SiMe₃. Fluid C is a compound having the formula PrMeSi(OSiMe₃)₂. Fluid D is a compound having the formula iBuMeSi(OSiMe₃)₂. Fluid E is a compound having the formula HexMeSi(OSiMe₃)₂. Fluid F is a compound having the formula (PrMe₂Si)₂O. Fluid G is a compound having the formula (n-BuMe₂Si)₂O. Fluid H is a compound having the formula HexMe₂SiOSiMe₃. Fluid I is a mixture of Fluid B compounds. Fluid J is a compound having the formula n-BuMeSi(OSiMe₃)₂. Fluid K is a mixture of 30 weight percent of Fluid I and 70 weight percent of Fluid A. Fluid L is a mixture of 70 weight percent of Fluid C and 30 weight percent of Fluid I. Fluid M is a mixture of 65 weight percent of Fluid G and 35 weight percent of Fluid B. Fluid N is a mixture of 75 weight percent of Fluid C and 25 weight percent of Fluid E. Fluid O is a mixture of 50 weight percent of Fluid C and 50 weight percent of Fluid E. Fluid P is a mixture of 25 weight percent of Fluid C and 75 weight percent of Fluid E. Fluid Q is a mixture of 20 weight percent of Fluid C and 80 weight percent of Fluid J.

**Table I**

| | | | VISCOSITY (mPa ·s) | | | | |
|---|---|---|---|---|---|---|---|
| FLUID | BP(°C) 1 Bar | FP °C(°F) | 25°C (77°F) | 0°C (32°F) | -30°C (-22°F) | -50°C (-58°F) | -70°C (-94°F) |
| A* | 153 | 37.2(99) | 0.81 | 1.18 | 2.08 | 3.47 | 6.4 |
| B* | | 46.6(116) | 1.25 | 1.93 | 3.65 | 6.68 | 13.8 |
| C | 187 | 58.9(138) | 1.07 | 1.64 | 3.14 | 5.90 | 12.6 |
| D | --- | 55.6(132) | 1.34 | 2.11 | 4.16 | 8.03 | 17.6 |
| E | 228 | 79.5(175) | 1.59 | 2.82 | 6.65 | 16.3 | 47.6 |
| F | 185 | 57.2(135) | 0.96 | 1.37 | 2.49 | 4.53 | 9.2 |
| G | 210 | 87.8(190) | 1.17 | 1.93 | 4.03 | 9.00 | 23.6 |
| H | 203 | 68.3(155) | 1.12 | 1.84 | 3.89 | 8.96 | 24.4 |
| I* | --- | 72.2(162) | 1.77 | 2.81 | 5.52 | 10.1 | 20.8 |
| J | --- | 65.6(151) | 1.17 | 1.92 | 3.77 | 7.61 | 17.7 |
| K* | | 42.2(108) | 1.08 | 1.62 | 3.00 | 5.17 | 9.9 |
| L* | | 62.8(145) | 1.25 | 1.95 | 3.82 | 6.88 | 13.9 |
| M | | 60.0(140) | 1.22 | 1.95 | 3.97 | 8.12 | 19.1 |
| N | | 60.0(140) | 1.22 | 1.90 | 3.68 | 7.25 | 16.3 |
| O | | 65.6(150) | 1.40 | 2.30 | 4.63 | 9.95 | 24.9 |
| P | | 72.2(162) | 1.45 | 2.46 | 5.31 | 12.7 | 35.9 |
| Q | | 62.8(145) | 1.32 | 2.02 | 3.83 | 8.05 | 19.6 |

| | | | | | | | |
|---|---|---|---|---|---|---|---|
| * = comparative examples | | | | | | | |

### Example II

The heat transfer fluid compositions of our invention was evaluated by testing several of the compositions for low temperature crystallization and determining the glass transition temperatures T(g),°C. for these compositions. The results are reported in Table II. All compounds in Table II were tested for 1 month or 24 hours at -85°C. to -90°C., except for those that were tested during routine DSC analysis. It can be seen from Table II that only one of the compositions tested showed any degree of crystallization at low temperatures, even at extended periods of time. It should also be noted that the glass transition temperatures of these compounds are extremely low indicating their potential effectiveness as heat transfer fluids in devices utilized for cooling.

**TABLE II**

| COMPOUND | CRYSTALLIZATION | TIME | T(g),°C. |
|---|---|---|---|
| F₃-PrMeSi(OSiMe₃)₂ | mp = -69°C | | -129 |
| n-PrMeSi(OSiMe₃)₂ | none observed | 1 month | -141 |
| PentylMeSi(oSiMe₃)₂ | none observed | DSC analysis | -133 |
| HexMeSi(OSiMe₃)₂ | none observed | 1 month 50% | |
| PrMeSi(OSiMe₃)₂-HexMeSi(OSiMe₃)₂ | none observed | 1 month 50% | |
| n-octylMeSi(OSiMe₃)₂ | none observed | DSC analysis | -127 |
| (PrMe₂Si)₂O | none observed | 24 hours | |
| HexMe₂SiOSiMe₃ | none observed | 24 hours | -137 |
| (n-BuMe₂Si)₂O | none observed | 1 month | |
| iBuMe₂SiOSiMe₂Hex | none observed | DSC analysis | -140 |

## Claims

1. A heat transfer fluid composition comprising an organosiloxane selected from
(a) R¹R₂SiO(RR¹SiO)ₓ(R₂SiO)_{y}SiR₃
(b) R¹₂RSiO(RR¹SiO)ₓ(R₂SiO)_{y}SiR₃;
(c) R¹₃SiO(RR¹SiO)ₓ(R₂SiO)_{y}SiR₃;
(d) R₃SiO(RR¹SiO)ₓ(R₂SiO)_{y}SiR₃;
(e) R¹R₂SiO(RR¹SiO)ₓ(R₂SiO)_{y}SiR¹R₂;
(f) R¹₂RSiO(RR¹SiO)ₓ(R₂SiO)_{y}SiR¹₂R;
(g) R¹₃SiO(RR¹SiO)ₓ(R₂SiO)_{y}SiR¹₃; and
(h) mixtures thereof;
wherein each R is a radical independently selected from alkyl radicals having from 1 to 20 carbon atoms, haloalkyl radicals having from 1 to 20 carbon atoms, cycloalkyl radicals having from 4 to 20 carbon atoms and aryl radicals and R¹ has the formula CₙH₂ₙ₊₁ wherein n has a value of from 1 to 10, x has a value of from 0 to 100 and y has a value of from 0 to 100, with the proviso that there is present in the composition at least one R¹ group wherein n has a value of 2 to 10.

2. A composition according to claim 1 wherein the organosiloxane is selected from R¹MeSi(OSiMe₃)_{2,} R¹Me₂SiOSiMe₂R¹, R¹Me₂SiOSiMe₃, Me₃SiO(Me₂SiO)ₓSiMe₃ and mixtures thereof.

3. A composition according to claim 2 wherein the organosiloxane is a mixture of organosiloxanes selected from PrMeSi(OSiMe₃)₂ and HexMeSi(OSiMe₃)₂, BuMeSi(OSiMe₃)₂ and PrMeSi(OSiMe₃)₂, (BuMe₂Si)₂O and Me₃SiO(Me₂SiO)ₓSiMe₃ and PrMeSi(OSiMe₃)₂ and Me₃SiO(Me₂SiO)ₓSiMe₃, wherein Me is methyl, Pr is propyl, Bu is butyl and Hex is hexyl.

4. A method of using a heat transfer fluid in a device utilized for cooling comprising an organosiloxane selected from
(a) R¹R₂SiO(RR¹SiO)ₓ(R₂SiO)_{y}SiR₃;
(b) R¹₂RSiO(RR¹SiO)ₓ(R₂SiO)_{y}SiR₃;
(c) R¹₃SiO(RR¹SiO)ₓ(R₂SiO)_{y}SiR₃;
(d) R₃SiO(RR¹SiO)ₓ(R₂SiO)_{y}SiR₃;
(e) R¹R₂SiO(RR¹SiO)ₓ(R₂SiO)_{y}SiR¹R₂;
(f) R¹₂RSiO(RR¹SiO)ₓ(R₂SiO)_{y}SiR¹₂R;
(g) R¹₃SiO(RR¹SiO)ₓ(R₂SiO)_{y}SiR¹₃; and
(h) mixtures thereof,
wherein each R is a radical independently selected from alkyl radicals having from 1 to 20 carbon atoms, haloalkyl radicals having from 1 to 20 carbon atoms, cycloalkyl radicals having from 4 to 20 carbon atoms and aryl radicals and R¹ has the formula CₙH₂ₙ₊₁ wherein n has a value of from 1 to 10, x has a value of from 0 to 100 and y has a value of from 0 to 100, with the proviso that there is present in the fluid at least one R¹ group wherein n has a value of from 2 to 10.

## Patentansprüche

1. Wärmeübertragungsflüssigkeitszusammensetzung, die ein Organosiloxan enthält, das aus
(a) R¹R₂SiO(RR¹SiO)ₓ(R₂SiO)_{y}SiR₃,
(b) R¹₂RSiO(RR¹SiO)ₓ(R₂SiO)_{y}SiR₃,
(c) R¹₃SiO(RR¹SiO)ₓ(R₂SiO)_{y}SiR₃,
(d) R₃SiO(RR¹SiO)ₓ(R₂SiO)_{y}SiR₃,
(e) R¹R₂SiO(RR¹SiO)ₓ(R₂SiO)_{y}SiR¹R₂,
(f) R¹₂RSiO(RR¹SiO)ₓ(R₂SiO)_{y}SiR¹₂R,
(g) R¹₃SiO(RR¹SiO)ₓ(R₂SiO)_{y}SiR¹₃ und
(h) Gemischen hiervon
ausgewählt ist, wonn jeder Rest R für einen Rest steht, der unabhängig voneinander aus Alkylresten mit 1 bis 20 Kohlenstoffatom(en), Halogenalkylresten mit 1 bis 20 Kohlenstoffatom(en), Cycloalkylresten mit 4 bis 20 Kohlenstoffatomen und Arylresten ausgewählt ist, und R¹ die Formel CₙH₂ₙ₊₁ besitzt, worin n einen Wert von 1 bis 10 besitzt, x einen Wert von 0 bis 100 aufweist und y einen Wert von 0 bis 100 besitzt, wobei gilt, daß in der Zusammensetzung mindestens eine Gruppe R¹ vorhanden ist, worin n einen Wert von 2 bis 10 besitzt.

2. Zusammensetzung nach Anspruch 1, worin das Organosiloxan aus R¹MeSi(OSiMe₃)₂, R¹Me₂SiOSiMe₂R¹, R¹Me₂SiOSiMe₃ und Me₃SiO(Me₂SiO)ₓSiMe₃ und Gemischen hiervon ausgewählt ist.

3. Zusammensetzung nach Anspruch 2, worin das Organosiloxan ein Gemisch von Organosiloxanen ist, das aus PrMeSi(OSiMe₃)₂ und HexMeSi(OSiMe₃)₂, BuMeSi(OSiMe₃)₂ und PrMeSi(OSiMe₃)₂, (BuMe₂Si)₂O und Me₃SiO(Me₂SiO)ₓSiMe₃ und PrMeSi(OSiMe₃)₂ und Me₃SiO(Me₂SiO)ₓSiMe₃ ausgewählt ist, worin Me für Methyl, Pr für Propyl, Bu für Butyl und Hex für Hexyl stehen.

4. Verfahren zur Verwendung einer Wärmeübertragungsflüssigkeit in einer zum Kühlen verwendeten Vorrichtung, die ein Organosiloxan enthält, das aus
(a) R¹R₂SiO(RR¹SiO)ₓ(R₂SiO)_{y}SiR_{3,}
(b) R¹₂RSiO(RR¹SiO)ₓ(R₂SiO)_{y}SiR₃,
(c) R¹₃SiO(RR¹SiO)ₓ(R₂SiO)_{y}SiR_{3,}
(d) R₃SiO(RR¹SiO)ₓ(R₂SiO)_{y}SiR₃,
(e) R¹R₂SiO(RR¹SiO)ₓ(R²SiO)_{y}SiR¹R₂,
(f) R¹₂RSiO(RR¹SiO)ₓ(R₂SiO)_{y}SiR¹₂R,
(g) R¹₃SiO(RR¹SiO)ₓ(R₂SiO)_{y}SiR¹₃ und
(h) Gemischen hiervon
ausgewählt ist, worin jeder Rest R für einen Rest steht, der unabhängig voneinander aus Alkylresten mit 1 bis 20 Kohlenstoffatom(en), Halogenalkylresten mit 1 bis 20 Kohlenstoffatom(en), Cycloalkylresten mit 4 bis 20 Kohlenstoffatomen und Arylresten ausgewählt ist, und R¹ die Formel CₙH₂ₙ₊₁ besitzt, wonn n einen Wert von 1 bis 10 besitzt, x einen Wert von 0 bis 100 besitzt und y einen Wert von 0 bis 100 besitzt, wobei gilt, daß in der Flüssigkeit mindestens eine Gruppe R¹ vorhanden ist, worin n einen Wert von 2 bis 10 besitzt.

## Revendications

1. Une composition de fluide caloporteur comprenant un organosiloxane choisi parmi
(a) R¹R₂SiO(RR¹SiO)ₓ(R₂SiO)_{y}SiR₃ ;
(b) R¹₂RSiO(RR¹SiO)ₓ(R₂SiO)_{y}SiR₃ ;
(c) R¹₃SiO(RR¹SiO)ₓ(R₂SiO)_{y}SiR₃ ;
(d) R₃SiO(RR¹SiO)ₓ(R₂SiO)_{y}SiR₃ ;
(e) R¹R₂SiO(RR¹SiO)ₓ(R₂SiO)_{y}SiR¹R₂ ;
(f) R¹₂RSiO(RR¹SiO)ₓ(R₂SiO)_{y}SiR¹₂R ;
(g) R¹₃SiO(RR¹SiO)ₓ(R₂SiO)_{y}SiR¹₃ ; et
(h) leurs mélanges ;
où chaque R est un radical choisi indépendamment parmi les radicaux alkyles ayant 1 à 20 atomes de carbone, les radicaux halogénoalkyles ayant 1 à 20 atomes de carbone, les radicaux cycloalkyles ayant 4 à 20 atomes de carbone et les radicaux aryles, et R¹ répond à la formule CₙH₂ₙ₊₁ où la valeur de n est de 1 à 10, la valeur de x est de 0 à 100 et la valeur de y est de 0 à 100, avec la condition qu'au moins un groupe R¹ dans lequel la valeur de n est de 2 à 10 soit présent dans la composition.

2. Une composition selon la revendication 1, dans laquelle l'organosiloxane est choisi parmi R¹MeSi(OSiMe₃)₂, R¹Me₂SiOSiMe₂R¹, R¹Me₂SiOSiMe₃, Me₃SiO(Me₂SiO)ₓSiMe₃ est leurs mélanges.

3. Une composition selon la revendication 2, dans laquelle l'organosiloxane est un mélange d'organosiloxanes choisis parmi PrMeSi(OSiMe₃)₂ et HexMeSi(OSiMe₃)₂, BuMeSi (OSiMe₃)₂ et PrMeSi(OSiMe₃)₂, (BuMe₂Si)₂O et Me₃SiO(Me₂SiO)ₓSiMe₃, et PrMeSi(OSiMe₃)₂ et Me₃SiO(Me₂SiO)ₓSiMe₃, où Me est un radical méthyle, Pr est un radical propyle, Bu est un radical butyle et Hex est un radical hexyle.

4. Un procédé d'utilisation, dans un dispositif utilisé pour le refroidissement, d'un fluide caloporteur comprenant un organosiloxane choisi parmi
(a) R¹R₂SiO(RR¹SiO)ₓ(R₂SiO)_{y}SiR₃ ;
(b) R¹₂RSiO(RR¹SiO)ₓ(R₂SiO)_{y}SiR₃ ;
(c) R¹₃SiO(RR¹SiO)ₓ(R₂SiO)_{y}SiR₃ ;
(d) R₃SiO(RR¹SiO)ₓ(R₂SiO)_{y}SiR₃ ;
(e) R¹R₂SiO(RR¹SiO)ₓ(R₂SiO)_{y}SiR¹R₂ ;
(f) R¹₂RSiO(RR¹SiO)ₓ(R₂SiO)_{y}SiR¹₂R ;
(g) R¹₃SiO(RR¹SiO)ₓ(R₂SiO)_{y}SiR¹₃ ; et
(h) leurs mélanges ;
où chaque R est un radical choisi indépendamment parmi les radicaux alkyles ayant 1 à 20 atomes de carbone, les radicaux halogénoalkyles ayant 1 à 20 atomes de carbone, les radicaux cycloalkyles ayant 4 à 20 atomes de carbone et les radicaux aryles, et R¹ répond à la formule CₙH₂ₙ₊₁ où la valeur de n est de 1 à 10, la valeur de x est de 0 à 100 et la valeur de y est de 0 à 100, avec la condition qu'au moins un groupe R¹ dans lequel la valeur de n est de 2 à 10 soit présent dans le fluide.
